(19) Europäisches Patentamt

European Patent Office

Office européen des brevets

(11) **EP 1 253 308 B1**

(12) **EUROPEAN PATENT SPECIFICATION**

(45) Date of publication and mention
of the grant of the patent:
**23.11.2005 Bulletin 2005/47**

(51) Int Cl.7: **F02D 35/00**, F01N 3/22

(21) Application number: **02006345.9**

(22) Date of filing: **21.03.2002**

(54) **Method and apparatus for controlling harmful emissions from internal combustion engines**

Verfahren und Vorrichtung zur Regelung des Schadstoffausstosses von Verbrennungskraftmaschinen

Procédé et dispositif de contrôle de l'emission des produits nocifs de moteurs à combustion interne

(84) Designated Contracting States:
**DE ES FR IT TR**

(30) Priority: **02.04.2001 IT MI010701**

(43) Date of publication of application:
**30.10.2002 Bulletin 2002/44**

(73) Proprietor: **DUCATI ENERGIA S.p.A.**
**40132 Bologna (IT)**

(72) Inventors:
• **Venturoli, Alessandro**
**40134 Bologna (IT)**
• **Balen, Cesare**
**400050 Monte S. Pietro (BO) (IT)**
• **Trozzi, Leonardo**
**40139 Bologna (IT)**

(74) Representative: **Coloberti, Luigi**
**Via E. de Amicis No. 25**
**20123 Milano (IT)**

(56) References cited:
GB-A- 1 478 652    US-A- 3 759 232
US-A- 4 058 978    US-A- 5 934 247
US-A- 6 125 821

**Description**

BACKGROUND OF THE INVENTION

This invention refers to a method and to a relevant apparatus for controlling the emissions of harmful gases of internal combustion engines, in particular low-power Otto engines of two or four stroke type for motor vehicles provided with a carburettor fuel system, according to which the engine is fed with a flow of fuel mixture, comprising primary combustion air and secondary combustion air to allow a complete postcombustion of the gases in a catalysed exhaust system.

The deterioration of environmental conditions and the increasing pollution caused by harmful gases emitted by the numerous vehicles crowding the streets, has made the harmful emission problem even more critical, and has consequently led to the introduction of stricter regulations, with the consequent need to seek new solutions capable of substantially reducing the emission of unburned gases.

STATE OF THE ART

In order to partially solve the problem of unburned gases, in general use is made of catalytic type afterburning systems, which in some ways are penalised by the operative conditions of the engine, by their temperature and by the quantity of air or oxygen available for the afterburning.

In general, it is necessary to act upon the air-fuel ratio, that is to say upon the strength of the mixture fed to the engine, working with an excess of air to allow for complete afterburning of the unburned hydrocarbons.

In order to limit the emission of harmful gases, it is consequently important not only to have suitable catalytic afterburning systems, but it is just as important to carry out an efficient setting of the fuel feeding system, coordinating the same with the ignition system.

The setting and control of the fuel feeding system, in general must take into consideration a number of operative factors of the engine, for example the rotational speed at which the engine is running, the quantity of air in the fuel mixture fed to the engine, the air temperature, the temperature of the engine, as well as variable conditions of use especially in transient states, in choked operating conditions, in the warming up or the ignition condition at the starting.

From US-A-3,759,239 it is known a method and an apparatus for controlling harmful emissions of an engine, according to the preamble of claims 1 and 6, in which use is made of a by pass duct for the carburettor, comprising a throttling valve operated by the accelerator pedal, and by a control unit, specifically provided to throttle an additional air flow merely depending on the oxygen content in the exhaust gases and the rotational speed of the engine.

BOSCH Motronic 1. Ausgabe January 1983 relates to an apparatus for controlling the idling running of an engine, using a rotary valve actuated by an electric motor having opposite acting windings connected to a control unit, to change the opening position of the rotary valve to throttle an additional air flow, depending on operative conditions of the engine.

OBJECTS OF THE INVENTION

The main object of this invention is to provide a method and an apparatus for controlling the harmful emission of internal combustion engines, whereby it is possible to obtain a substantial reduction of the unburned gas, by means of an appropriate control of the feeding system for the fuel mixture, whereby it is possible to introduce a new freedom degree in the setting of the fuel system itself.

A further object of the invention is to provide a method and an apparatus as specified above, by which it is made possible to achieve coordination between the fuel feeding system and the ignition system, both during the initial warming up of the engine, and under normal operating conditions with the engine running at a steady state during the movement of the motor vehicle.

A still further object of the invention is to provide a method and an apparatus, by which it is possible to achieve an integrated operation and control of the function of "automatic starter" of the carburettor.

A still further object of the invention is to provide an apparatus for controlling the fuel feeding system of an internal combustion engine, which net only makes it possible to achieve a substantial reduction of the harmful emissions, but is also made in such a way as tc be easily fitted onto already engineered and industrialised motor vehicles, without the need to carry cut expensive modifications to the basic components.

BRIEF DESCRIPTION OF THE INVENTION

The above can be achieved by means of a method for controlling the harmful emissions of internal combustion engines according to claim 1, and by means of an apparatus according to claim 6.

For the purposes of this invention, the expression "load condition of the engine" is usually understood to mean a control condition of the carburetion in relation to the opening condition of the valve inside the carburettor and/or the suction or vacuum conditions existing downstream of the carburettor itself, detected by a low pressure sensing device.

BRIEF DESCRIPTION OF THE DRAWINGS

These and further features of the method and the apparatus for controlling the harmful emissions of internal combustion engines, according to this invention, will be more clearly evident from the following description and from the examples of the accompanying drawings, in which:

Fig. 1 shows the general block diagram of the apparatus;
Fig. 2 shows a detailed view of the electronic control unit of Fig.1;
Fig. 3 shows a graph designed to illustrate the modulation mode of the valve controlling the flow of secondary combustion air;
Fig. 4 shows a diagram illustrating the control modes of the starter;
Fig. 5 shows a diagram illustrating the control modes of the ignition timing during the initial warming up of the engine, and respectively during normal running at steady state.

DETAILED DESCRIPTION OF THE INVENTION

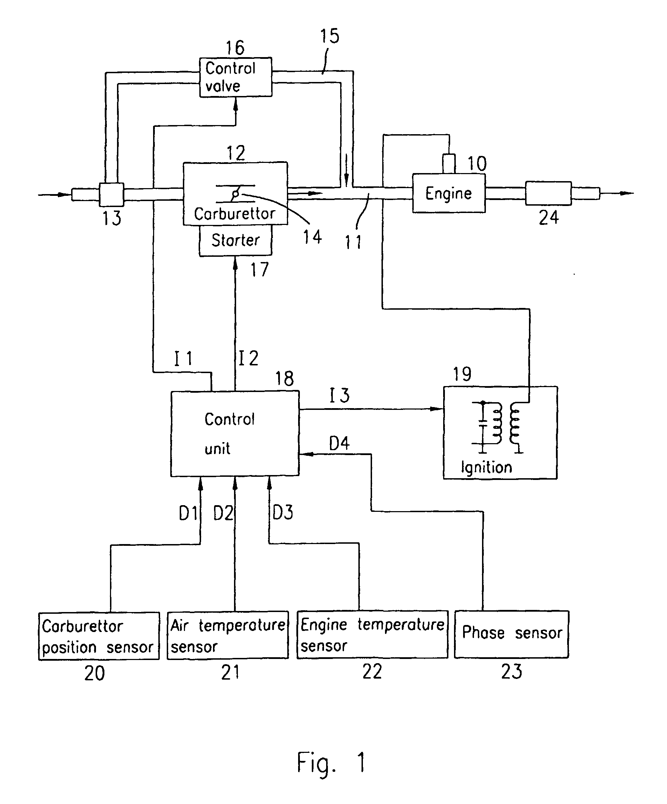

In Fig. 1, reference number 10 schematically indicates an internal combustion engine, of the specified type, connected by means of a duct 11 to the outlet side of a carburettor 12, to feed the engine 10 with a fuel mixture comprising a flow of primary combustion air sucked from the outside through a filter 13; the flow of the fuel mixture is usually adjusted by a valve 14 inside the carburettor, depending on the running condition and power required by the engine.

In Fig. 1, reference number 15 indicates a secondary air-feeding duct branched between the air filter 13, upstream of the carburettor 12, and the outlet side of the same carburettor, at a point of the duct 11 for feeding the mixture to the engine 10.

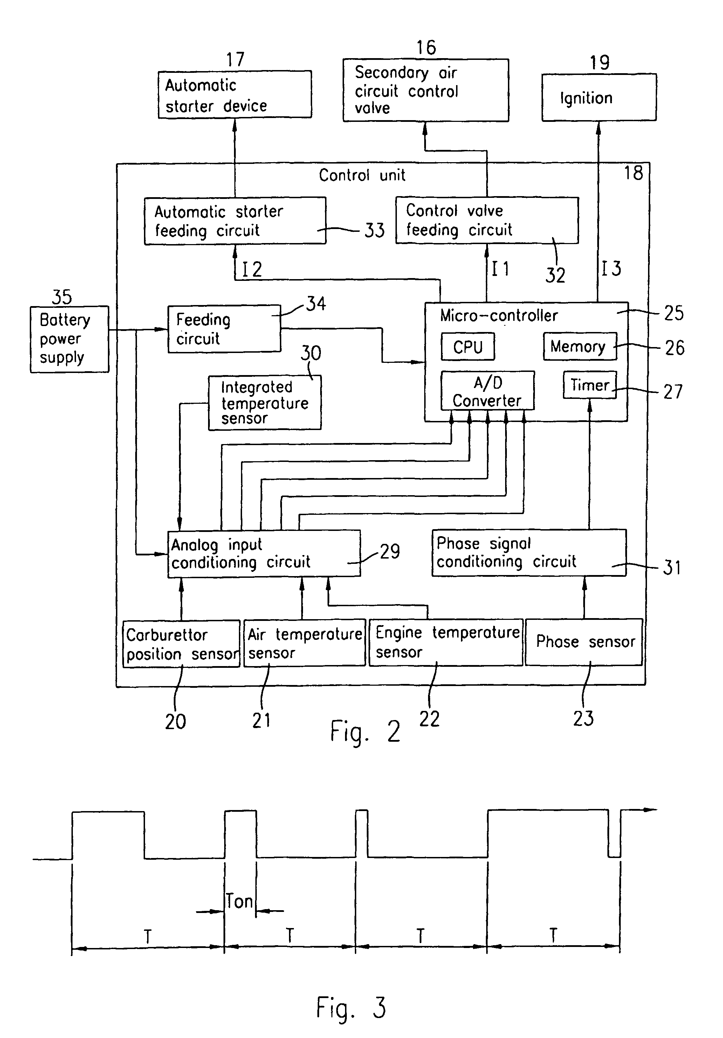

The branched duct 15 for feeding the secondary combustion air, in turn comprises an air-flow control valve 16, consisting for example of a solenoid valve, whose operative cycle will be explained further on with reference to figures 2 and 3 of the accompanying drawings.

Also in Fig. 1, reference 17 indicates the usual starter of the carburettor 12, while reference 18 schematically indicates an electronic control unit to control the operation of the entire apparatus, in particular the valve 16 controlling the flow of secondary air, the starter 17 of the carburettor 12, and the ignition circuit 19 of the engine 10.

In the same Fig. 1, reference 20 indicates a first means for sensing the open condition of the valve 14 of the carburettor, which can branch off for example from the position of the accelerator control, to provide the electronic control unit 18 with first process data D1 correlated to a first operative parameter, corresponding to the quantity of fuel mixture fed to the engine, depending upon the percentage of aperture of the valve 14 of the carburettor.

Reference 21 indicates second sensing means designed to detect the temperature of the air sucked by the carburettor 12, so as to provide the control unit 18 with second process data D2 correlated to a second operative parameter of the engine.

Again in Fig. 1, reference 22 indicates a third engine temperature sensing means, designed to provide the control unit 18 with third process data D3, while reference 23 indicates an engine timing sensor, to provide both the electronic control unit 18 and the ignition 19 with fourth process data D4.

Lastly, reference 24 in Fig. 1 indicates a catalysed system for the afterburning of the exhaust gases.

Fig. 2 of the accompanying drawings shows a detailed view of the principal components of the electronic control unit 18.

As shown, the control unit 18 comprises a micro-controller 25 including a central processing unit, CPU, a memory 26 in which are stored, for example in tabular form, the main control algorithms of the apparatus, and also comprises a timer 27 and an analog/digital converter A/D.

The A/D converter is connected to the outlets of a conditioning circuit 29 for the analog inputs which receive the input signals D1, D2, D3 from the sensors 20, 21 and 22. An additional temperature sensor 30 can be provided in a structurally integrated form with the same control unit 18, as an alternative to the two temperature sensors 21 and 22.

From Fig. 2 it can be seen that the timing sensor 23 sends out a signal or process data D4 which is fed to the timer 27 of the micro-controller, through a conditioning circuit 31; in addition, the outlet I1 of the micro-controller 25 is transmitted to a circuit 32 for actuation of the solenoid control valve 16 which controls the flow of secondary combustion air, while the outlet I2 is fed to a circuit 33 for feeding the automatic starter 17; the latter, as is known, comprises a resistive element, usually a PTC, which heats a quantity of wax, the volume of which changes considerably according to the temperature.

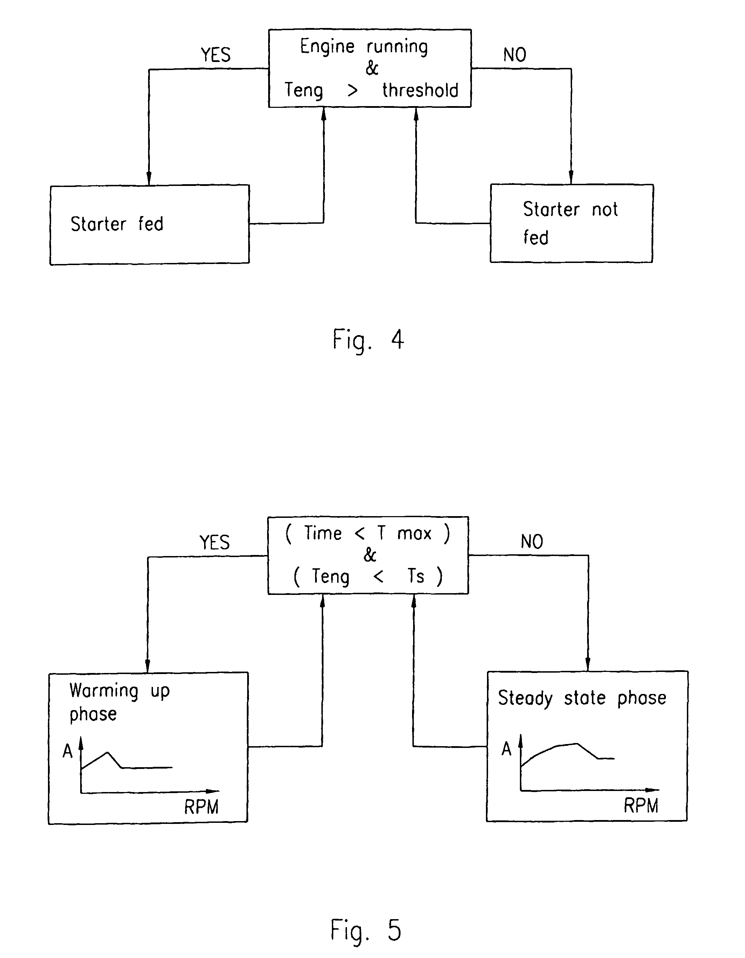

The expansion of wax moves a device which progressively cut-off an auxiliary circuit of the carburettor, capable of determining the inflow of a given quantity of fuel mixture to the engine. The operation and control modes of the starter will be explained further on with reference to the diagram of Fig. 4.

Lastly, reference 34 in Fig. 2 indicates a feeding circuit for the control unit 18, connected to a direct current power source 35, for example to a battery.

As mentioned previously, the control unit 18, by means of the valve 16 for controlling the flow of secondary combustion air, acts to modify the strength, that is to say the air/fuel ratio in the fuel mixture fed to the engine 10, which in the conventional feeding systems is defined exclusively by the characteristics and by the setting conditions of the carburettor 12.

According to this invention, the control unit 18 controls the feeding of the secondary combustion air-flow, by cyclically controlling the opening time of the valve 16 of the air-feeding duct 15, by means of an operative cycle hereinafter defined as "duty cycle", in relation to the process data obtained from the operative parameters of the engine, in particular from the following:

RPM= rotational speed of the engine 10 (revs per minute) provided by the timing sensor 23;

TPS= position of the throttle of the valve 16 for controlling the flow of secondary air, expressed in percentage of aperture, provided by the sensor 20;

Teng= temperature of the engine 10 detected by the sensor 22;

Tas= temperature of the sucked air detected by the temperature sensor 21.

The speed of rotation RPM is assessed by the micro-controller 25 by interfacing with the conditioning circuit 31 and the timing sensor 23, making also use of the ignition system 19 for the correct timing of the spark. The conditioning circuit 31 must consequently be dimensioned in such a way as not to jeopardise the correct operation of the ignition, by presenting an input impedance greater than that of the ignition circuit 19.

For the sake of structural simplicity and in order to reduce costs, the temperature Teng of the engine and the temperature Tas of the intake air, can also be detected by a single sensor 30 structurally integrated into the electronic control unit 18 which, after suitably positioning the latter close to the engine, provides an intermediate indication between the two aforesaid temperatures; during practical tests, this solution has given satisfactory results.

Informations about the opening conditions of the valve 14 of the carburettor, can be acquired for example from the accelerator control, by suitably conditioning the signal provided by a potentiometer connected to the rotation of the control handle.

The quantity of secondary air which flows into the branched circuit 15, between the inlet and the outlet sides of the carburettor 12, is controlled according to a method of pulse width modulation (PWM), whose operative principle consists in controlling an open/clcsed type valve with a signal having a constant frequency, in this specific case a frequency of approximately 10Hz, by varying the time during which the valve remains open in each period; this time, divided by the period itself, is normally indicated as "duty cycle". The modulation of the "duty cycle" is consequently equivalent to the modulation of the flow of secondary air which flows into the branched circuit 15, thereby making it possible to change the air/fuel ratio of the mixture fed to the engine, providing a sufficient quantity of air excess necessary to complete the combustion of the exhaust gas in the catalytic afterburning device 24.

In practice, this control of the quantity of auxiliary air, carried out by the micro-controller 25 in relation to the process data received from the various sensors, provides an addition degree of freedom in the setting of the fuel system, as compared to the setting methods of conventional ones.

An example of "duty cycle" for modulating the opening of the control valve 16 for the flow of auxiliary air, is shown in Fig. 3 of the accompanying drawings where T indicates the length of the modulating cycle and Ton indicates the opening time of the control valve 16; the modulating "duty cycle" is given by the following relation

$$\text{duty cycle} = T_{on}/T$$

It should however be borne in mind that the weight of the "duty cycle" modulation on the value $\lambda$, that is to say on the air/fuel ratio referred to the stoichiometric value, also depends on the degree of aperture of the valve 14 which chokes the main flow of the carburettor 12.

If the value of the flow of air fed by the carburettor 12 is indicated by $\Phi1$, and the respective air/fuel ratio defined by the setting of the carburettor is indicated by $\lambda1$, and the value of the flow of secondary air fed to the engine 10 is indicated by $\Phi2$, the total flow $\Phi3$ of air fed to the engine 10 will be:

$$\Phi3 = \Phi1 + \Phi2$$

and the quantity of fuel present at the outlet of the carburettor will be equivalent to $\Phi1/\lambda1$.

Consequently, the effective air/fuel ratio of the mixture fed to the engine will be given by:

$$\lambda3 = \lambda1 * (\Phi1+\Phi2)/\Phi1, \text{ that is } \lambda3 = \lambda1 * (1+\Phi2/\Phi1)$$

From the foregoing, it will be evident therefore that, in programming the micro-processor of the control unit 18, it will be necessary to ensure that its outlets I1 and I2 supply the appropriate control signals for the valve 16 of the secondary air circuit, and of the starter device, in relation to the process data received from the various sensors which will be processed in a programmed way, according to suitable algorithms for controlling and calculating the times and modulating modes of the valve 16.

As specified, the harmful emissions are controlled by modifying the strength of the air/fuel mixture fed to the engine 10, by acting on different parameters, in particular on the "duty cycle" for modulating the control signal of the valve 16 of the air-feeding circuit for the auxiliary air, in parallel to the carburettor 12, and on the feeding condition of the automatic starter device 17 of the carburettor 12.

The control unit 18 will consequently operate, by means of the control valve 16 and the starter device 17, to modify the strength of the mixture from time to time, in particular to increase or decrease the quantity of air necessary in the different conditions of use of the engine 10; such strength would otherwise be defined exclusively by the characteristics and by the normal setting conditions of the carburettor.

The following description illustrates the main control algorithms which characterise the relation between the input data and the signals at the outlets of the control unit 18; indicating with:

RPM: the rotational speed of the engine (revs per minute);

TPS: the position of the accelerator control of the motor vehicle on which the apparatus is fitted (percentage of aperture of the valve 14 of the carburettor);

Tmp: the temperature of the control unit 18 detected by the sensor 30 (centigrades);

VB: the voltage of the power supply battery 35 (Volts);

the expression with which the "duty cycle" for modulating the control valve 16 is calculated, is given by the following formula:

$$\text{duty cycle} = F1 (RPM, TPS) \; F2 (Tmp) + F3 (VB)$$

The functions F2 and F3 are univocally defined by the linear interpolation of data stored in tables of the memory 26 of the micro-controller 25; the tables must obviously be prepared during the design phase by the manufacturer and defined by means of appropriate tests and/or calculating criteria which take into consideration the variable operating conditions of the engine 10, as well as the different conditions of use depending on whether the vehicle is moving along a flat, upward, or downward stretch, or in choked or stationary feeding conditions, including transitory operating conditions.

The following tables exemplify, purely by way of explanation, the various functions F1, F2 and F3 for calculating the "duty cycle"; the intermediate values are calculated by the processing unit, by simple linear interpolation.

TABLE I

| F1 (RPM, TPS) | | | | | | | | |
|---|---|---|---|---|---|---|---|---|
| TPS/RPM | 1000 | 2000 | 2500 | 3000 | 3500 | .... | .... | 10000 |
| 0% | 10% | 30% | .... | .... | .... | .... | .... | .... |
| 10% | 20% | 40% | .... | .... | .... | .... | .... | .... |
| 20% | 25% | 45% | .... | .... | .... | .... | ... | .... |
| .... | .... | .... | .... | .... | .... | .... | .... | .... |
| 100% | .... | .... | .... | .... | .... | .... | .... | .... |

In this table relating to function F1, the first line shows the rotational speed of the engine (RPM), the first column gives the percentages of aperture of the valve of the carburettor (TPS), while the remaining columns, in correspondence with each rotational speed of the engine and of each percentage of aperture for the valve of the carburettor, give the percentages of aperture of the control valve 16 for the secondary air feeding circuit.

TABLE II

| F2 (Tmp) | | | | | | | |
|---|---|---|---|---|---|---|---|
| -20°C | 0°C | 10°C | 20°C | 40°C | 50°C | 60°C | 80°C |
| 0.2 | 0.5 | 0.7 | 0.9 | 1 | 1 | 1 | 1 |

This second table relating to the function F2 shows the temperatures (Tmp) detected by the sensor 30, together with the relevant correction coefficients of the percentage of aperture of the valve 16, calculated by function F1 of the preceding table.

TABLE III

| F3 (VB) | | | | | |
|---|---|---|---|---|---|
| 6V | 8V | 9V | ..... | 14V | 15V |
| 20% | 10% | 8% | ..... | 0% | 0% |

In this third table, relating to the function F3, the first line gives the values of the voltage (VB) of the power supply battery 35, while the second line gives the corresponding aperture percentages of the control valve 16 for controlling the flow of auxiliary air, to be added to the percentage value supplied by the preceding tables.

In fact, it is also necessary to bear in mind the voltage VB of the power supply battery which, although not having a direct effect on the operation of the engine and the carburettor, can nevertheless give rise to a variation in the secondary combustion air, by affecting the speed of aperture of the valve 16; the voltage of the battery VB is consequently detected by the control unit to compensate for this effect.

The data in the various tables have been given only in part, in that they merely serve to exemplify hypothetical working conditions of the engine 10. Consequently, as the number of revolutions of the engine, the percentage of aperture of the valve 14 of the carburettor, the temperature detected by the sensor 5, or by the sensors 21 and 22 varies, or in relation to the voltage of the power supply battery 35, the micro-controller 25 carries out the necessary calculations and modulates the "duty cycle" of the secondary air flow fed to the engine; moreover, the control unit 18 takes care of the management of the automatic starter 17 of the carburettor, discriminating between the two possible conditions of "starter fed" and "starter not fed" in relation to a threshold temperature Tsg stored in the micro-controller 25, as represented by the flow chart of Fig. 4.

In this figure, it can be seen that with the engine running, in the condition in which the temperature Teng of the engine is higher than the threshold temperature Tsg (YES), the micro-controller 25 with its outlet I2 will enable the feeding circuit 33 of the automatic starter device 17.

Whenever the aforesaid proposition is not verified (NO), the control unit will disenable the feeding of the starter device 17.

In order to further reduce harmful emissions, it is also useful to carry out a correct management of the warming up phase of the engine, to subsequently ensure a satisfactory combustion process.

It is well known, in fact, that one of the main critical points of the catalysed afterburning systems, consists in their substantial inefficiency until their temperature reaches a certain activation threshold at each cold starting of the engine.

One of the fundamental parameters for reaching the operative temperature of the catalyser, consisting of the temperature of the exhaust gas, is closely related to the initial ignition phase.

A further feature of this invention contemplates a differentiated management of the ignition circuit at the moment of cold starting of the engine, which aims at reaching the activation state of the catalysed afterburning system more rapidly.

All this is achieved by means of the apparatus according to the invention, by handling the ignition phase during a transitory warming up of the engine, in a differentiated way compared to the handling of the ignition phase during the normal steady state operation of the engine, in order to more rapidly reach the complete efficiency of the afterburning system.

The strategy for controlling the ignition phase during the transient warming up period is described in the diagram of Fig. 5, which on the left-hand side schematically shows a generic curve A for handling the spark advance during the transitory warming up of the engine, while the right-hand side shows a generic curve for handling the ignition phase during the normal steady state operation of the engine.

In particular, with reference to the aforesaid figure, if we indicate with:

Time=     the time elapsed after starting up the engine;

Tmax=     the parameter which indicates the maximum duration of the transitory warming up period, memorised in the micro-processor of the control unit;

Teng =     the temperature of the engine detected by the sensor 22 or by the sensor 30;

Ts =     the temperature at which the engine is considered as warm, programmed in the memory of the micro-controller 25 of the control unit;

it ensues that when the proposition: (Time<Tmax) & (Teng<Ts) is fulfilled (YES), the control unit 18 will control the ignition 19 of the engine in keeping with the phase programmed for the transitory warming up period of the engine; conversely, when such proposition is not fulfilled (NO), the control unit 18 will control the ignition 19 according to the data parameterised for the steady state ignition phase exemplified by the right-hand curve shown in Fig. 5.

From what has been described and shown in the various figures of the accompany drawings, it will be evident that what is provided is a method and an apparatus for controlling the harmful emissions of internal combustion engines suitable for achieving the desired purposes; in particular, they make it possible both to control the system for feeding fuel to the engine, and to control the ignition phases in a programmed way, in relation to process data selectively detected by a series of engine operating parameters, chosen from among the speed of rotation, the quantity of air in the fuel mixture fed to the engine, in relation to the percentage of aperture of the valve of the carburettor, the temperature of the intake air, the temperature of the engine, or the temperature of the control unit itself, integrated with an appropriate sensor, as well as taking into consideration the indirect influence of the voltage of the power supply battery.

It is understood however that what has been described and shown with reference to the accompanying drawings, is given purely by way of non-restrictive exemplification of the invention. Consequently, other modification or variations may be made to the entire apparatus and/or to the procedures for controlling the valve for feeding the secondary combustion air and/or of the starter, as well as to the strategy for controlling the ignition phases, without deviating from the scope of the accompanying claims.

## Claims

1. Method for controlling the harmful emissions of an internal combustion engine (10), according to which the engine (10) is fed with a fuel mixture by means of a carburettor (12), having a first air-flow control valve (14) and in which the engine (10) is connected to the exhaust by means of a afterburning catalytic device (24), comprising the stages of:

   - selectively detecting process data (D1-D4) from operative parameters (20-23) or said first air-flow control valve (14) and of the engine (10), including the rotational speed and the load conditions of the same engine (10);
   - feeding a metered quantity of secondary combustion air into the fuel mixture, by means of a duct (15) branched off between inlet and outlet sides of the carburettor (12), said branched off duct (15) being provided with a second air-flow control valve (16); and
   - controlling by said second air-flow control valve (16) the quantity of secondary air fed into the fuel mixture in accordance with the detected process data (D1-D4) of said first air-flow control valve (14) and said engine (10) **characterized by** the steps of:

     - providing said second air-flow control valve (16) of the branched off duct (15) in the form of an ON-OFF control valve (16);
     - providing a cyclic ON-OFF control signal (I1) to open and close the second control valve (16), said control signal (I1) having a constant period frequency; and
     - changing the quantity of secondary air fed by the branched-off duct (15) into the fuel mixture, by cyclically modulating the ON-OFF time radio of the control signal (I1) to change the opening time (Ton) of the second control valve (16) at each period (T) of the ON-OFF control signal (I1), in relation to the process data (D1-D4) detected from the operative parameters (20-23) of said first air-flow control valve (14) of the carburettor (12) and said engine (10).

2. Method according to claim 1, **characterised by** the step of detecting the temperature (22) of the engine (10) and adjusting the quantity of secondary combustion air by said air-flow control valve (16) in relation to the detected engine temperature (22).

3. Method according to claim 1, **characterised by** the step of detecting the temperature (21) of the intake air, and adjusting the quantity of secondary air by said air-flow control valve (16) in relation to the air detected temperature (21).

4. Method according to claim 1, in which the carburettor comprises an automatic starter device (17), **characterised by** the step of actuating the starter device (17) of the carburettor (12), during the running of the engine (10), when the detected engine temperature (22) is higher than a pre-established threshold temperature stored into a control unit (18).

5. Method according to claim 1 or 2, according to which a phase sensor (23) is operatively connected to an electronic control unit (18), and in which a first control phase is provided for controlling an ignition circuit (19) in steady state conditions of the engine, **characterised by** providing a second differentiated control phase for controlling the ignition circuit (19) during a warming up period of the engine (10), and allowing said differentiated control phase for controlling the ignition circuit (19) when the time elapsed after the starting up the engine (10), is less than a pre-established time length indicative of the maximum time-length allowed for the warming up of the engine (10), and when the detected engine temperature (22) is lower than a reference temperature stored into the control unit (18).

6. Apparatus for controlling the harmful emissions of an internal combustion engine (10), according to which the engine (10) is with a fuel mixture comprising primary combustion air, by means of a carburettor (12) having a first air-flow control valve (14) and in which the engine (10) is connected to an exhaust by means of an afterburning catalytic device (10), the apparatus comprising:

   - an auxiliary air-feeding duct (15) branched off between inlet and outlet sides of the carburettor (12) for feeding secondary combustion air into the fuel mixture;
   - a second air-flow control valve (16) in said branched-off duct (15);
   - an electronic control unit (18) operatively connected to the first and second air-flow control valves (14-16) of the carburettor and the branched off duct (15);
   - first sensing means (23) to provide the control unit (18) with process data (D4) indicative of the rotational speed of the engine (10);
   - second sensing means (21-22) to provide the control unit (18) with process data (D1-D3) indicative of the load condition of the air-flow control valve (14) of the carburettor (12) and the engine (10);

   **characterized in that**:

   - said second control valve (16) is in the form of an ON-OFF control valve; and an electronic control unit (18) to provide a cyclic ON-OFF control signal (I1) for the second control valve (16), having a constant-period frequency (T); detected by the temperature sensor of the engine (10).
   - said electronic control unit (18) being programmed to cyclically actuate the opening and closing of the second on-off control valve (16) of the auxiliary air-feeding duct, and modulate the opening and closing time ratio of the same on-off control valve (16), during each period (T) of the cyclic on-off control signal (I1) provided by the electronic control unit (18), to actuate the said second on-off control valve (16) in relation to the process data (D1-D4) detected by said first and second sensing means (21-23).

7. Apparatus according to claim 6, **characterised by** comprising an engine temperature sensor (22), and in that said control unit (18) is programmed to vary the ratio between the opening and the closing time of the air-flow control valve (16) of the auxiliary air-feeding duct (15), in relation to process data (D3)

8. Apparatus according to claim 6 or 7, **characterised by** comprising an air temperature sensor (21), and in that said control unit (18) is programmed to vary the ratio between the opening and the closing time of the air-flow control valve (16) of the auxiliary air-feeding duct (15), in relation to process data (D2) detected by said air temperature sensor (21).

9. Apparatus according to claim 6, **characterised by** comprising an engine temperature sensor (30) integrated in the electronic control unit (18), and in that the electronic control unit (18) is programmed to vary the ratio between the opening and the closing time of the air-flow control valve (16) of the branched duct (15), in relation to process

EP 1 253 308 B1

data detected by said integrated temperature sensor (30).

10. Apparatus according to claim 7 or 9 in which the carburettor (12) for feeding the fuel mixture comprises an automatic starter device (17), **characterised in that** said electronic control unit (18) is programmed to actuate the automatic starter device (17), during running of the engine (10), when the temperature of the engine (10) detected by said temperature sensor (22;30), is higher than a pre-established threshold temperature stored in the electronic control unit (18).

11. Apparatus according to claim 7 or 9, comprising a phase sensor (23) operatively connected to the ignition circuit of the engine (10), and to the electronic control unit (18), **characterised in that** said electronic control unit (18) is programmed to actuate a control phase for the ignition in steady state operative condition of the engine (10), and respectively a differentiated control phase for the ignition during a warming up period of the engine (10), and to actuate said differentiated control phase when the time elapsed after a start-up of the engine (10), is shorter than a pre-established time indicative of the maximum period allowed for warming up the engine (10), stored in the control unit (18), and when the engine temperature detected by said sensor (22;30) is lower than a reference temperature stored into the control unit (18) at which the engine (10) is considered warm.

12. Apparatus according to claim 6, comprising a battery (35) for supplying power to the control unit (18), **characterised in that** said control unit (18) is programmed to vary the ratio between the opening and the closing time of the air-feeding control valve (16) of the branched duct (15), in relation to the supply voltage of the battery (35).

**Patentansprüche**

1. Verfahren zum Steuern der schädlichen Emissionen einer Brennkraftmaschine (10), bei dem der Motor (10) mittels eines Vergasers (12), der ein erstes Luftdurchfluss-Steuerventil (14) aufweist, mit einem Kraftstoffgemisch versorgt wird und bei dem der Motor (10) über eine katalytische Nachbrennvorrichtung (24) mit dem Auspuff verbunden ist, wobei das Verfahren die folgenden Schritte umfasst:

- wahlweises Erfassen von Prozessdaten (D1-D4) aus Betriebsparametern (20-23) des ersten Luftdurchfluss-Steuerventils (14) und des Motors (10) einschließlich der Drehzahl und der Lastbedingungen dieses Motors (10);
- Zuführen einer dosierten Menge sekundärer Verbrennungsluft zu dem Kraftstoffgemisch durch eine Rohrleitung (15), die zwischen der Einlassseite und der Auslassseite des Vergasers (12) abgezweigt ist, wobei die abgezweigte Rohrleitung (15) mit einem zweiten Luftdurchfluss-Steuerventil (16) versehen ist; und
- Steuern der Menge der dem Kraftstoffgemisch zugeführten Sekundärluft mittels des zweiten Luftdurchfluss-Steuerventils (16) in Übereinstimmung mit den erfassten Prozessdaten (D1-D4) des ersten Luftdurchfluss-Steuerventils (14) und des Motors (10), **gekennzeichnet durch** die folgenden Schritte:

  - Vorsehen des zweiten Luftdurchfluss-Steuerventils (16) der abgezweigten Rohrleitung (15) in Form eines EIN/AUS-Steuerventils (16);
  - Bereitstellen eines zyklischen EIN/AUS-Steuersignals (I1), um das zweite Steuerventil (16) zu öffnen und zu schließen, wobei das Steuersignal (11) eine Frequenz mit konstanter Periode besitzt; und
  - Ändern der Menge der Sekundärluft, die dem Kraftstoffgemisch von der abgezweigten Rohrleitung (15) zugeführt wird, **durch** zyklisches Modulieren des EIN/AUS-Zeitverhältnisses des Steuersignals (11), um die Öffnungszeit (Ton) des zweiten Steuerventils (16) in jeder Periode (T) des EIN/AUS Steuersignals (11) in Abhängigkeit von den Prozessdaten (D1-D4), die aus den Betriebsparametem (20-23) des ersten Luftdurchfluss-Steuerventils (14) des Vergasers (12) und des Motors (10) erfasst werden, zu ändern.

2. Verfahren nach Anspruch 1, **gekennzeichnet durch** den Schritt des Erfassens der Temperatur (22) des Motors (10) und des Einstellens der Menge der sekundären Verbrennungsluft **durch** das Luftdurchfluss-Steuerventil (16) in Abhängigkeit von der erfassten Motortemperatur (22).

3. Verfahren nach Anspruch 1, **gekennzeichnet durch** den Schritt des Erfassens der Temperatur (21) der Einlassluft und des Einstellens der Menge der Sekundärluft **durch** das Luftdurchfluss-Steuerventil (16) in Abhängigkeit von der erfassten Lufttemperatur (21).

4. Verfahren nach Anspruch 1, bei dem der Vergaser eine automatische Startervorrichtung (17) umfasst, **gekenn-**

9

**zeichnet durch** den Schritt des Betätigens der Startervorrichtung (17) des Vergasers (12) während des Laufs des Motors (10), wenn die erfasste Motortemperatur (22) höher als eine im Voraus festgelegte und in einer Steuereinheit (18) gespeicherte Schwellentemperatur ist.

5. Verfahren nach Anspruch 1 oder 2, bei dem ein Phasensensor (23) mit einer elektronischen Steuereinheit (18) funktional verbunden ist und bei dem eine erste Steuerphase vorgesehen ist, um eine Zündschaltung (19) in stationären Zuständen des Motors zu steuern, **gekennzeichnet durch** das Vorsehen einer zweiten differenzierten Steuerphase, um die Zündschaltung (19) während einer Aufwärmperiode des Motors (10) zu steuern, und Zulassen, dass die differenzierte Steuerphase die Zündschaltung (19) steuert, wenn die nach dem Starten des Motors (10) verstrichene Zeit kürzer ist als eine im Voraus festgelegte Zeitdauer, die die maximale Zeitdauer angibt, die für das Aufwärmen des Motors (10) zugelassen ist, und wenn die erfasste Motortemperatur (22) niedriger als eine in der Steuereinheit (18) gespeicherte Referenztemperatur ist.

6. Vorrichtung zum Steuern der schädlichen Emissionen einer Brennkraftmaschine (10), bei der der Motor (10) mittels eines Vergasers (12), das ein ersten Luftdurchfluss-Steuerventil (14) aufweist, mit einem primäre Verbrennungsluft enthaltenen Kraftstoffgemisch versorgt wird und bei der der Motor (10) über eine katalytische Nachbrennvorrichtung (10) mit einem Auspuff verbunden ist, wobei die Vorrichtung umfasst:

   - eine Hilfsluftzufuhr-Rohrleitung (15), die zwischen der Einlassseite und der Auslassseite des Vergasers (12) abgezweigt ist, um dem Kraftstoffgemisch sekundäre Verbrennungsluft zuzuführen;
   - ein zweites Luftdurchfluss-Steuerventil (16) in der abgezweigten Rohrleitung (15);
   - eine elektronische Steuereinheit (18), die mit dem ersten und dem zweiten Luftdurchfluss-Steuerventil (14-16) des Vergasers bzw. der abgezweigten Rohrleitung (15) funktional verbunden ist;
   - erste Erfassungsmittel (23), um die Steuereinheit (18) mit Prozessdaten (D4) zu versorgen, die die Drehzahl des Motors (10) angeben;
   - zweite Erfassungsmittel (21-22), um die Steuereinheit (18) mit Prozessdaten (D1-D3) zu versorgen, die den Lastzustand des Luftdurchfluss Steuerventils (14) des Vergasers (12) und des Motors (10) angeben; **dadurch gekennzeichnet, dass**

      - das zweite Steuerventil (16) die Form eines EIN/AUS-Steuerventils hat; und eine Steuereinheit (18) vorgesehen ist, die ein zyklisches EIN/AUSSteuersignal (11) für das zweite Steuerventil (16), das eine Frequenz (T) mit konstanter Periode besitzt, bereitstellt; und
      - die elektronische Steuereinheit (18) so programmiert ist, dass sie das Öffnen und Schließen des zweiten EIN/AUS-Steuerventils (16) der Hilfsluftzufuhrrohrleitung zyklisch veranlasst und das Öffnungs- und Schließungs Zeitverhältnis dieses EIN/AUS-Steuerventils (16) in jeder Periode T des zyklischen EIN/ AUS-Steuersignals (11), das durch die elektronische Steuereinheit (18) bereitgestellt wird, moduliert, um das zweite EIN/AUS-Steuerventil (16) in Abhängigkeit von den Prozessdaten (D1-D4), die durch das erste und das zweite Erfassungsmittel (21-23) erfasst werden, zu betätigen.

7. Vorrichtung nach Anspruch 6, **dadurch gekennzeichnet, dass** ein Motortemperatursensor (22) vorgesehen ist und dass die Steuereinheit (18) so programmiert ist, dass sie das Verhältnis zwischen der Öffnungs- und der Schließzeit des Luftdurchfluss-Steuerventils (16) der Hilfsluftzufuhr Rohrleitung (15) in Abhängigkeit von den Prozessdaten (D3), die durch den Temperatursensor des Motors (10) detektiert werden, verändert.

8. Vorrichtung nach Anspruch 6 oder 7, **dadurch gekennzeichnet, dass** ein Lufttemperatursensor (21) vorgesehen ist und dass die Steuereinheit (18) so programmiert ist, dass sie das Verhältnis zwischen der Öffnungs- und der Schließzeit des Luftdurchfluss-Steuerventils (16) der Hilfsluftzufuhr Rohrleitung (15) in Abhängigkeit von durch den Lufttemperatursensor (21) erfassten Prozessdaten (D2) verändert.

9. Vorrichtung nach Anspruch 6, **dadurch gekennzeichnet, dass** ein Motortemperatursensor (30) vorgesehen ist, der in die elektronische Steuereinheit (18) integriert ist, und dass die elektronische Steuereinheit (18) so programmiert ist, dass sie das Verhältnis zwischen der Öffnungs- und der Schließzeit des Luftdurchfluss-Steuerventils (16) der abgezweigten Rohrleitung (15) in Abhängigkeit von durch den integrierten Temperatursensor (30) erfassten Prozessdaten verändert.

10. Vorrichtung nach Anspruch 7 oder 9, bei der der Vergaser (12) für die Zuführung des Kraftstoffgemisches eine automatische Startervorrichtung (17) umfasst, **dadurch gekennzeichnet, dass** die elektronische Steuereinheit (18) so programmiert ist, dass sie die automatische Startervorrichtung (17) während des Laufs des Motors (10) betätigt, wenn die Temperatur des Motors (10), die durch den Temperatursensor (22; 30) erfasst wird, höher als eine im Voraus festgelegte und in der elektronischen Steuereinheit (18) gespeicherte Schwellentemperatur ist.

**11.** Vorrichtung nach Anspruch 7 oder 9, die einen Phasensensor (23) umfasst, der mit der Zündschaltung des Motors (10) und mit der elektronischen Steuereinheit (18) funktional verbunden ist, **dadurch gekennzeichnet, dass** die elektronische Steuereinheit (18) so programmiert ist, dass sie eine Steuerphase für die Zündung im stationären Betriebszustand des Motors (10) veranlasst und eine entsprechende differenzierte Steuerphase für die Zündung in einer Aufwärmperiode des Motors (10) veranlasst und die differenzierte Steuerphase dann veranlasst, wenn die seit dem Starten des Motors (10) verstrichene Zeitdauer kürzer ist als eine im Voraus festgelegte Zeitdauer, die die zum Aufwärmen des Motors (10) maximal zulässige Zeitdauer angibt und in der Steuereinheit (18) gespeichert ist, und wenn die durch den Sensor (22; 30) erfasste Motortemperatur niedriger ist als eine Referenztemperatur, die in der Steuereinheit (18) gespeichert ist und bei der der Motor (10) als warm angesehen wird.

**12.** Vorrichtung nach Anspruch 6, die eine Batterie (35) umfasst, um die Steuereinheit (18) mit Leistung zu versorgen, **dadurch gekennzeichnet, dass** die Steuereinheit (18) so programmiert ist, dass sie das Verhältnis zwischen der Öffnungs- und der Schließzeit des Luftzufuhr-Steuerventils (16) der abgezweigten Rohrleitung (15) in Abhängigkeit von der Versorgungsspannung der Batterie (35) verändert.

**Revendications**

**1.** Procédé pour maîtriser les émissions nocives d'un moteur à combustion interne (10), selon lequel le moteur (10) reçoit un mélange de carburant à l'aide d'un carburateur (12) comportant une première vanne de commande de flux d'air (14), et dans lequel le moteur (10) est relié à l'échappement au moyen d'un dispositif catalytique postcombustion (24), comprenant les étapes consistant à :

- détecter sélectivement des données de traitement (D1-D4) à partir de paramètres fonctionnels (20-23) de ladite première vanne de commande de flux d'air (14) et du moteur (10), incluant la vitesse de rotation et les conditions de charge dudit moteur (10) ;
- ajouter une quantité dosée d'air de combustion secondaire au mélange de carburant, au moyen d'une conduite (15) branchée entre les côtés entrée et sortie du carburateur (12), ladite conduite branchée (15) étant munie d'une deuxième vanne de commande de flux d'air (16) ; et
- régler, au moyen de ladite deuxième vanne de commande de flux d'air (16), la quantité d'air secondaire ajoutée au mélange de carburant selon les données de traitement détectées (D1-D4) de ladite première vanne de commande de flux d'air (14) et dudit moteur (10), **caractérisé par** les étapes consistant à :

- prévoir ladite deuxième vanne de commande de flux d'air (16) de la conduite branchée (15) sous la forme d'une vanne de commande tout ou rien (16) ;
- fournir un signal de commande cyclique tout ou rien (I1) pour ouvrir et fermer la deuxième vanne de commande (16), ledit signal de commande (I1) ayant une fréquence constante ; et
- modifier la quantité d'air secondaire ajoutée au mélange de carburant par la conduite branchée (15), en modulant de manière cyclique le rapport cyclique du signal de commande (I1) pour modifier le temps d'ouverture (Ton) de la deuxième vanne de commande (16) à chaque période (T) du signal de commande tout ou rien (I1), relativement aux données de traitement (D1-D4) détectées à partir des paramètres fonctionnels (20-23) de ladite première vanne de commande de flux d'air (14) du carburateur (12) et dudit moteur (10).

**2.** Procédé selon la revendication 1, **caractérisé par** l'étape consistant à détecter la température (22) du moteur (10) et à régler la quantité d'air de combustion secondaire au moyen de ladite vanne de commande de flux d'air (16) relativement à la température du moteur détectée (22).

**3.** Procédé selon la revendication 1, **caractérisé par** l'étape consistant à détecter la température (21) de l'air d'admission, et à régler la quantité d'air secondaire au moyen de ladite vanne de commande de flux d'air (16) relativement à la température détectée de l'air (21).

**4.** Procédé selon la revendication 1, dans lequel le carburateur comprend un dispositif formant starter automatique (17), **caractérisé par** l'étape consistant à actionner le dispositif de starter (17) du carburateur (12), pendant la marche du moteur (10), lorsque la température du moteur détectée (22) est supérieure à une température seuil préétablie mémorisée dans une unité de gestion (18).

5. Procédé selon la revendication 1 ou 2, selon lequel un capteur de phase (23) est connecté de manière fonctionnelle à une unité de gestion électronique (18), et dans lequel une première phase de commande est fournie pour commander un circuit d'allumage (19) dans les conditions de régime établi du moteur, **caractérisé par** l'opération consistant à fournir une deuxième phase de commande différenciée pour commander le circuit d'allumage (19) pendant une période de mise en température du moteur (10), et à autoriser ladite phase de commande différenciée pour commander le circuit d'allumage (19) lorsque le temps écoulé après le démarrage du moteur (10) est inférieur à un intervalle de temps préétabli représentant l'intervalle de temps maximum autorisé pour la mise en température du moteur (10), et lorsque la température du moteur détectée (22) est inférieure à une température de référence mémorisée dans l'unité de gestion (18).

6. Dispositif permettant de maîtriser les émissions nocives d'un moteur à combustion interne (10), selon lequel le moteur (10) reçoit un mélange de carburant comprenant de l'air de combustion primaire, à l'aide d'un carburateur (12) comportant une première vanne de commande de flux d'air (14), et dans lequel le moteur (10) est relié à un échappement au moyen d'un dispositif catalytique postcombustion (10), le dispositif de maîtrise des émissions nocives comprenant :

   - une conduite d'alimentation en air auxiliaire (15) branchée entre les côtés entrée et sortie du carburateur (12) pour ajouter de l'air de combustion secondaire au mélange de carburant ;
   - une deuxième vanne de commande de flux d'air (16) dans ladite conduite branchée (15) ;
   - une unité de gestion électronique (18) connectée de manière fonctionnelle aux première et deuxième vannes de commande de flux d'air (14-16) du carburateur et à la conduite branchée (15) ;
   - un premier moyen de mesure (23) destiné à fournir à l'unité de gestion (18) des données de traitement (D4) représentant la vitesse de rotation du moteur (10) ;
   - un deuxième moyen de mesure (21-22) destiné à fournir à l'unité de gestion (18) des données de traitement (D1-D3) représentant la condition de charge de la vanne de commande de flux d'air (14) du carburateur (12) et du moteur (10) ;

      **caractérisé en ce que** :

   - ladite deuxième vanne de commande (16) se présente sous la forme d'une vanne de commande tout ou rien ; et une unité de gestion électronique (18) pour fournir un signal de commande cyclique tout ou rien (I1) pour la deuxième vanne de commande (16), ayant une fréquence constante (T) ;
   - ladite unité de gestion électronique (18) étant programmée pour actionner de manière cyclique l'ouverture et la fermeture de la deuxième vanne de commande tout ou rien (16) de la conduite d'alimentation en air auxiliaire, et pour moduler le rapport cyclique d'ouverture et de fermeture de ladite vanne de commande tout ou rien (16), pendant chaque période (T) du signal de commande cyclique tout ou rien (I1) fourni par l'unité de gestion électronique (18), afin d'actionner ladite deuxième vanne de commande tout ou rien (16) relativement aux données de traitement (D1-D4) détectées par lesdits premier et deuxième moyens de mesure (21-23).

7. Dispositif selon la revendication 6, **caractérisé en ce qu'**il comprend un capteur de température (22) du moteur, et **en ce que** ladite unité de gestion (18) est programmée pour faire varier le rapport entre le temps d'ouverture et le temps de fermeture de la vanne de commande de flux d'air (16) de la conduite d'alimentation en air auxiliaire (15), relativement à des données de traitement (D3) détectées par le capteur de température du moteur (10).

8. Dispositif selon la revendication 6 ou 7, **caractérisé en ce qu'**il comprend un capteur de température d'air (21), et **en ce que** ladite unité de gestion (18) est programmée pour faire varier le rapport entre le temps d'ouverture et le temps de fermeture de la vanne de commande de flux d'air (16) de la conduite d'alimentation en air auxiliaire (15), relativement à des données de traitement (D2) détectées par ledit capteur de température d'air (21).

9. Dispositif selon la revendication 6, **caractérisé en ce qu'**il comprend un capteur de température (30) du moteur intégré à l'unité de gestion électronique (18), et **en ce que** l'unité de gestion électronique (18) est programmée pour faire varier le rapport entre le temps d'ouverture et le temps de fermeture de la vanne de commande de flux d'air (16) de la conduite branchée (15), relativement à des données de traitement détectées par ledit capteur de température intégré (30).

10. Dispositif selon la revendication 7 ou 9, dans lequel le carburateur (12) servant à fournir le mélange de carburant comprend un dispositif formant starter automatique (17), **caractérisé en ce que** ladite unité de gestion électronique (18) est programmée pour actionner le dispositif formant starter automatique (17), pendant la marche du moteur (10), lorsque la température du moteur (10) détectée par ledit capteur de température (22 ; 30) est supérieure à une température seuil préétablie mémorisée dans l'unité de gestion électronique (18).

11. Dispositif selon la revendication 7 ou 9, comprenant un capteur de phase (23) connecté de manière fonctionnelle au circuit d'allumage du moteur (10) et à l'unité de gestion électronique (18), **caractérisé en ce que** ladite unité de gestion électronique (18) est programmée pour actionner une phase de commande pour l'allumage dans les conditions de régime établi du moteur (10), et respectivement une phase de commande différenciée pour l'allumage pendant une période de mise en température du moteur (10), et pour actionner ladite phase de commande différenciée lorsque le temps écoulé après un démarrage du moteur (10) est inférieur à un intervalle de temps préétabli représentant la période maximale autorisée pour la mise en température du moteur (10), mémorisée dans l'unité de gestion (18), et lorsque la température du moteur détectée par ledit capteur (22 ; 30) est inférieure à une température de référence mémorisée dans l'unité de gestion (18) à laquelle le moteur (10) est considéré comme étant chaud.

12. Dispositif selon la revendication 6, comprenant une batterie (35) pour fournir du courant à l'unité de gestion (18), **caractérisé en ce que** ladite unité de gestion (18) est programmée pour faire varier le rapport entre le temps d'ouverture et le temps de fermeture de la vanne de commande d'alimentation en air (16) de la conduite branchée (15), relativement à la tension d'alimentation de la batterie (35).

Fig. 1

17
Automatic
starter device

16
Secondary air
circuit control
valve

19
Ignition

Control unit                                                                    18

Automatic starter
feeding circuit                    33

Control valve
feeding circuit                    32

I2                                           I1                        I3

35
Battery
power
supply

Feeding
circuit                    34

30
Integrated
temperature
sensor

Micro-controller                    25

CPU          Memory               26

A/D
Converter        Timer               27

Analog input
conditioning circuit               29

Phase signal
conditioning circuit               31

Carburettor
position sensor

Air temperature
sensor

Engine temperature
sensor

Phase sensor

20                  21          Fig. 2          22                  23

Ton

T                    T                    T                    T

Fig. 3

YES

Engine running
&
Teng > threshold

NO

Starter fed

Starter not
fed

Fig. 4

YES

( Time < T max )
&
( Teng < Ts )

NO

Warming up
phase

A

RPM

Steady state phase

A

RPM

Fig. 5